# EUROPEAN PATENT SPECIFICATION

(11) **EP 3 682 747 B1**
(45) Date of publication and mention of the grant of the patent: **19.03.2025**
(21) Application number: 18875516.9
(22) Date of filing: 13.11.2018
(51) Int. Cl.: A23L 33/105, A23L 33/135, A23B 7/10

(54) **FUNCTIONAL FERMENTED FOOD WITH HIGH LYCOPENE CONTENT**
FUNKTIONELLES FERMENTIERTES NAHRUNGSMITTEL MIT HOHEM LYCOPENGEHALT
ALIMENT FONCTIONNEL FERMENTÉ À TENEUR ÉLEVÉE EN LYCOPÈNE

(30) Priority: 13.11.2017 KR 20170150842
(43) Date of publication of application: 22.07.2020
(73) Proprietor: CJ Cheiljedang Corporation, Seoul 04560 (KR)
(72) Inventor: CHOI, Seung Hye, Seoul 04560 (KR); OH, Jiyoung, Seoul 04560 (KR); LEE, Dong Yun, Seoul 04560 (KR)
(74) Representative: Regimbeau
(86) International application number: PCT/KR2018/013801
(87) International publication number: WO 2019/093858

(56) References cited:
- CN-A- 103 149 165
- KR-A- 20110 009 560
- KR-A- 20130 047 246
- KR-A- 20150 012 338
- KR-A- 20150 067 531
- KR-A- 20170 050 975
- KR-A- 20170 058 032
- WILHELM STAHL: "Biochemical and Molecular Action of Nutrients Research Communication", 27 February 2001 (2001-02-27), XP093153563, Retrieved from the Internet <URL:https://www.sciencedirect.com/science/article/pii/S0022316622138198/pdfft?md5=e6a36e285d46d625a37321a5a92bde61&pid=1-s2.0-S0022316622138198-main.pdf>
- DARVIN M ET AL: "Cutaneous concentration of lycopene correlates significantly with the roughness of the skin", EUROPEAN JOURNAL OF PHARMACEUTICS AND BIOPHARMACEUTICS, ELSEVIER SCIENCE PUBLISHERS B.V., AMSTERDAM, NL, vol. 69, no. 3, 1 August 2008 (2008-08-01), pages 943 - 947, XP023519554, ISSN: 0939-6411, [retrieved on 20080213], DOI: 10.1016/J.EJPB.2008.01.034
- XINLI LI: "Lycopene Supplement and Blood Pressure: An Updated Meta-Analysis of Intervention Trials", NUTRIENTS, vol. 5, no. 9, 18 September 2013 (2013-09-18), CH, pages 3696 - 3712, XP093153559, ISSN: 2072-6643, DOI: 10.3390/nu5093696
- MEREL HAZEWINDUS ET AL: "The anti-inflammatory effect of lycopene complements the antioxidant action of ascorbic acid and -tocopherol", FOOD CHEMISTRY, ELSEVIER LTD, NL, vol. 132, no. 2, 15 November 2011 (2011-11-15), pages 954 - 958, XP028350525, ISSN: 0308-8146, [retrieved on 20111125], DOI: 10.1016/J.FOODCHEM.2011.11.075
- BARTKIENE, E. ET AL.: "Lactic Acid Fermentation of Tomato: Effects on cis/trans Lycopene Isomer Ratio, beta-Carotene Mass Fraction and Formation of L(+)- and D(-)-Lactic Acid", FOOD TECHNOLOGY AND BIOTECHNOLOGY, vol. 51, no. 4, 1 December 2013 (2013-12-01), pages 471 - 478, XP009521986, ISSN: 1330-9862
- NAJM W ET AL: "Dietary Supplements Commonly Used for Prevention", PRIMARY CARE, SAUNDERS, LONDON, GB, vol. 35, no. 4, 1 September 2008 (2008-09-01), pages 749 - 767, XP008105513, ISSN: 0095-4543, DOI: 10.1016/J.POP.2008.07.010
- LI PEIRONG ET AL: "Carotenoid identification and molecular analysis of carotenoid isomerase-encodingBrCRTISO, the candidate gene for inner leaf orange coloration in Chinese cabbage", MOLECULAR BREEDING: NEW STRATEGIES IN PLANT IMPROVEMENT, KLUWER ACADEMIC PUBLISHERS, NL, vol. 35, no. 2, 7 February 2015 (2015-02-07), pages 1 - 12, XP035468853, ISSN: 1380-3743, [retrieved on 20150207], DOI: 10.1007/S11032-015-0190-Z

## Description

### TECHNICAL FIELD

The present disclosure relates to a functional fermented food with a high lycopene content.

### BACKGROUND ART

Fermented foods refer to foods such as vegetables that have gone through fermentation by lactic acid bacteria so that nutritional values of ingredients are converted. Kimchi, as an example of foods produced by the fermentative action of microorganisms, may have improved nutritional values, preference, and storage stability since food components are degraded and new components are synthesized by the action of microorganisms. A method of preparing Kimchi comprising Chinese cabbage and a tomato concentrate is disclosed in Korean application KR 20150067531.

Although lycopene has been reported to have an effect on colorectal cancer prevention, there is a problem that a lycopene content cannot be maintained or may decrease in fermented foods such as kimchi during fermentation.

### DESCRIPTION OF EMBODIMENTS

### TECHNICAL PROBLEM

Under the circumstances, the present inventors have made efforts to develop fermented foods in which lycopene contents are not decreased. As a result, the present inventors have found that the lycopene content is not decreased when kimchi is manufactured by using a particular vegetable variety and a specific strain belonging to the genus *Leuconostoc* or *Lactobacillus,* thereby completing the present disclosure.

### SOLUTION TO PROBLEM

An object of the present disclosure is to provide a fermented food including a lycopene-containing Chinese cabbage and lactic acid bacteria, wherein the lactic acid bacteria is *Leuconostoc mesenteroides, Lactobacillus plantarum,* or a combination thereof .

Another object of the present disclosure is to provide a method of manufacturing a fermented food, the method including: preparing a salted lycopene-containing Chinese cabbage and seasoning ingredients including lactic acid bacteria, wherein the lactic acid bacteria is *Leuconostoc mesenteroides, Lactobacillus plantarum,* or a combination thereof; and mixing the seasoning ingredients with the salted Chinese cabbagee.

Still another object of the present disclosure is to provide a method of inhibiting a decrease in a lycopene content, the method including manufacturing a fermented food by mixing a lycopene-containing Chinese cabbage with lactic acid bacteria, wherein the lactic acid bacteria is *Leuconostoc mesenteroides, Lactobacillus plantarum* or a combination thereof.

### ADVANTAGEOUS EFFECTS OF DISCLOSURE

The present disclosure provides kimchi manufactured by using a Chinese cabbage 'The Han 1ho', which includes a functional ingredient of lycopene, unlike other Chinese cabbages, as a main raw ingredient, and lactic acid bacteria of *Leuconostoc mesenteroides* CJLM119 or *Lactobacillus plantarum* CJLP133, which are isolated from kimchi, as a lactic acid bacteria starter. The kimchi manufactured according to the present disclosure has effects on prevention of colitis and colorectal cancer.

### BRIEF DESCRIPTION OF DRAWINGS

FIG. 1 is a diagram showing a manufacturing process of cancer-preventing kimchi.
FIGS. 2A and 2B show a standard operating procedure of manufacturing cancer-preventing kimchi.

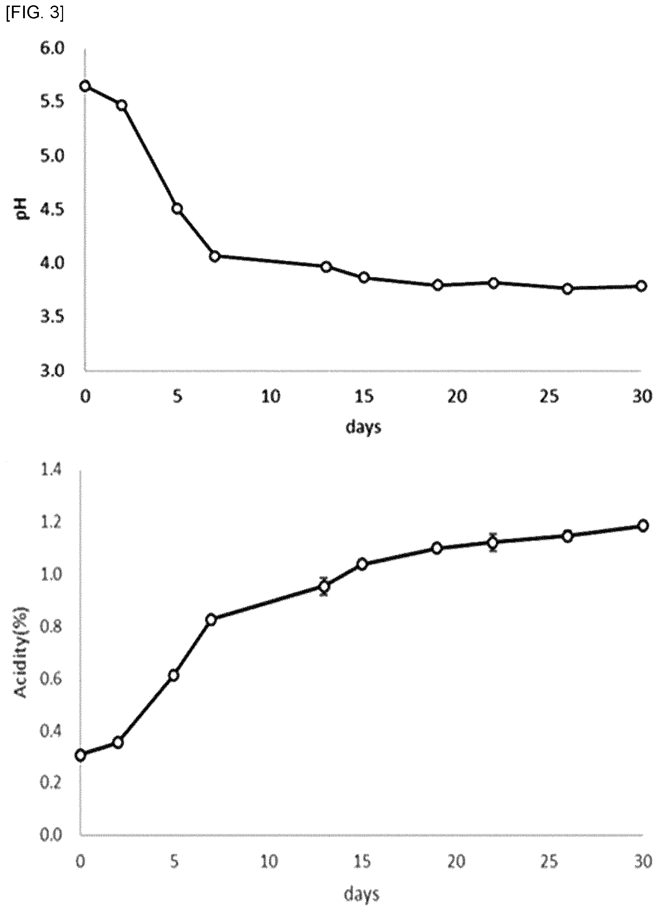

FIG. 3 is a graph illustrating changes in physiochemical qualities of cancer-preventing kimchi during distribution.

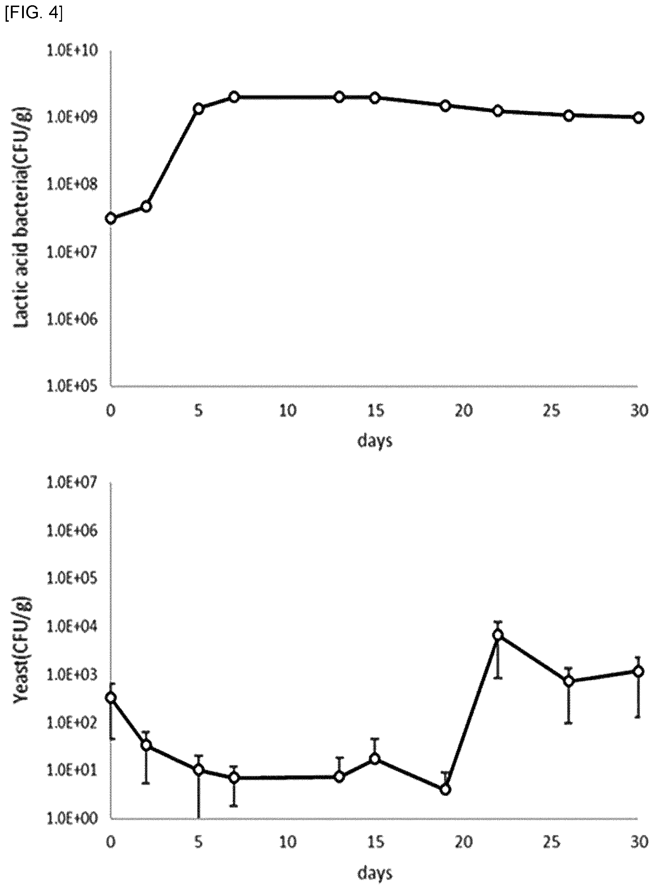

FIG. 4 is a graph illustrating changes in qualities of microorganisms during distribution of cancer-preventing kimchi.

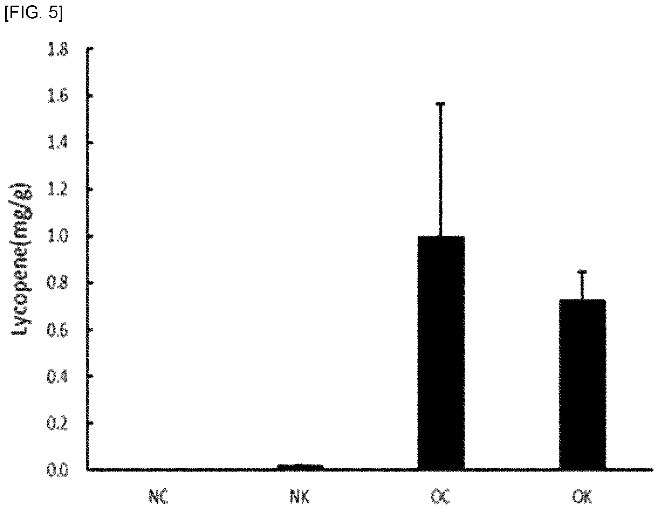

FIG. 5 is a graph illustrating lycopene contents of Chinese cabbage varieties (where NC: Normal Chinese cabbage, NK: Kimchi manufactured using normal Chinese cabbage, OC: The Han 1ho Chinese cabbage, and OK: Kimchi manufactured using The Han 1ho Chinese cabbage).

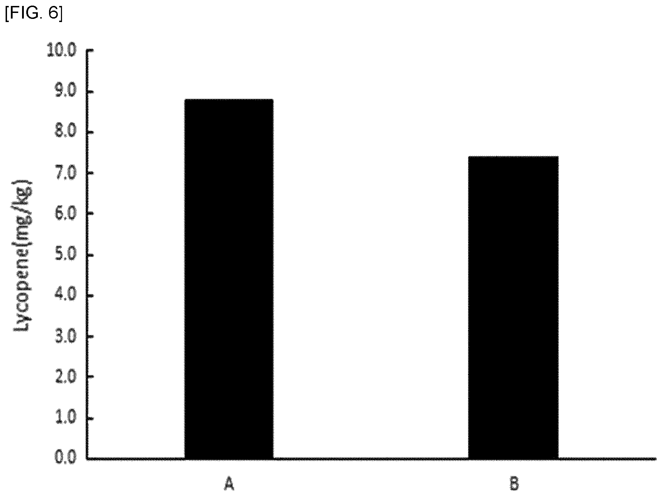

FIG. 6 is a graph illustrating lycopene contents of cancer-preventing kimchi according to storage time thereof (A: 7 days of storage and B: 6 months of storage).
FIG. 7 shows groups of a colitis animal model including cancer-preventing kimchi.

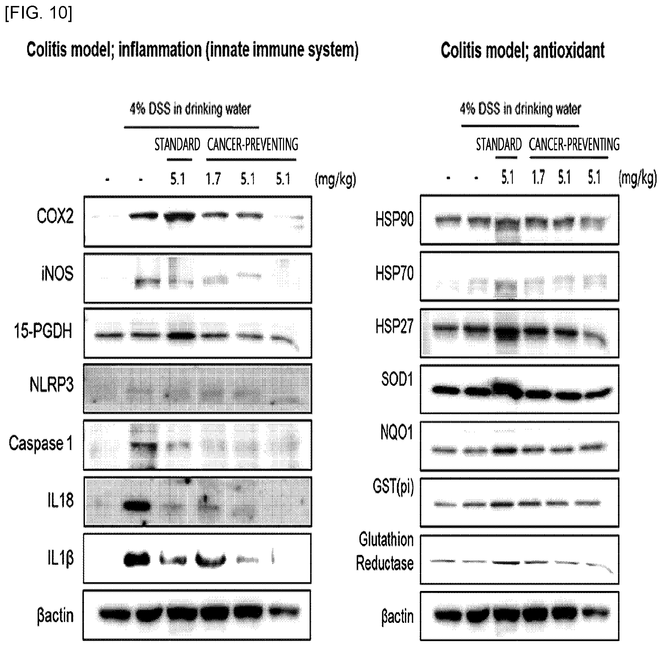

FIGS. 8, 9, and 10 show results of an animal model study.

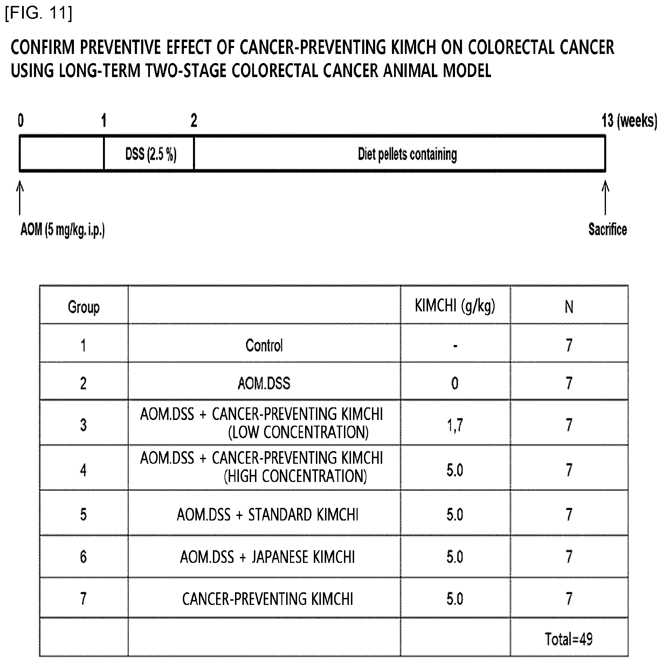

FIG. 11 shows a long-term two-stage colorectal cancer animal model including cancer-preventing kimchi.
FIGS. 12 and 13 show results of an animal model study.

### BEST MODE

Hereinafter, the present disclosure will be described in detail.

An aspect of the present disclosure to achieve the above-described objects provides a fermented food including a lycopene-containing Chinese cabbage and lactic acid bacteria wherein the lactic acid bacteria is *Leuconostoc mesenteroides, Lactobacillus plantarum,* or a combination thereof.

S The Chinese cabbage may be The Han 1ho Chinese cabbage, without being limited thereto. The Han 1ho Chinese cabbage is disclosed in Korean Patent Laid-open Publication No. 10-2015-0161731.

In addition, the lactic acid bacteria is strains belonging to the genus *Leuconostoc,* strains belonging to the genus *Lactobacillus,* According to the present invention, the lactic acid bacteria belonging to the genus *Leuconostoc* is *Leuconostoc mesenteroides,* and the lactic acid bacteria belonging to the genus *Lactobacillus* is *Lactobacillus plantarum.* Specifically, the *Leuconostoc mesenteroides* may be *Leuconostoc mesenteroides* CJLM119, and the *Lactobacillus plantarum* may be *Lactobacillus plantarum* CJLP133, without being limited thereto. The CJLP133 strain is disclosed in Korean Patent Laid-open Publication No. 10-2009-0067015, the disclosure of which is incorporated herein in its entirety by reference.

For the purpose of the present disclosure, a decrease in the lycopene content may be inhibited in the fermented food. Inhibition of the decrease in the lycopene content may include a case in which the lycopene content decreases or is maintained compared to the lycopene content in the vegetable before fermentation or at the beginning of fermentation. The inhibition of the decrease in the lycopene content may also include decreases in the lycopene content to 0% to 30%, 1% to 25%, 3% to 25%, 5% to 20%, 1% to 30%, 5% to 25%, 3% to 20%, or 5% to 15%, relative to that before fermentation or at the beginning of fermentation.

Specifically, a lycopene content of the fermented food may be in the range of 50% to 99%, more specifically 50%, 60%, 70% or more, and/or 75%, 80%, 90%, or 99%, relative to the lycopene content of the vegetable, without being limited thereto. The lycopene content (concentration) of the fermented food may be in the range of 0.6 mg/g to 0.98 mg/g, without being limited thereto.

In addition, a lycopene content of the fermented food after 6 months of storage may be in the range of 50% to 99%, specifically, 50%, 60%, 70% or more, and/or 75%, 80%, 90%, or 99%, relative to a lycopene content of the fermented food after 7 days of storage, without being limited thereto.

The fermented food is effective in preventing or treating cancer, hypertension, inflammation, skin aging, or erythema. The cancer may be colorectal cancer or gastric cancer, without being limited thereto.

Another aspect of the present disclosure to achieve the above objects provides a method of manufacturing a fermented food, the method including: preparing a salted lycopene-containing Chinese cabbage and seasoning ingredients including lactic acid bacteria, wherein the lactic acid bacteria is *Leuconostoc mesenteroides, Lactobacillus plantarum,* or a combination thereof; and mixing the seasoning ingredients with the salted Chinese cabbage.

Another aspect of the present disclosure to achieve the above objects provides a method of inhibiting a decrease in a lycopene content, the method including preparing a fermented food by mixing a lycopene-containing Chinese cabbage with lactic acid bacteria, wherein the lactic acid bacteria is *Leuconostoc mesenteroides, Lactobacillus plantarum,* or a combination thereof.

### MODE OF DISCLOSURE

Hereinafter, the present disclosure will be described in more detail with reference to the following examples.

### Example 1: Manufacturing Process of Cancer-preventing Kimchi

- A manufacturing process of cancer-preventing kimchi was verified by trial production thereof.

### 1-1. Trial Production of Cancer-preventing Kimchi

In order to develop a mass-production process for industrialization of cancer-preventing kimchi, scale-up trial production was designed and performed at an actual kimchi manufacturing facility. The designed process was verified and complemented via the trial production to set a final mass-production process.

The Han 1ho Chinese cabbage used for the trial production was harvested in April after seeding and transplanting in February in accordance with the spring (plastic film-covered greenhouse) cropping season by contract cultivation. The harvested The Han 1ho Chinese cabbage was warehoused in a kimchi factory of CJ CheilJedang Corporation and inspected whether the cabbage was suitable for kimchi by warehousing inspection, and trial production was performed in the kimchi factory of CJ CheilJedang Corporation according to the mass-production process.

As a result of the trial production, the manufacturing process of the cancer-preventing kimchi using The Han 1ho Chinese cabbage was able to be performed in the same manner as the existing kimchi manufacturing process. However, due to the risk of oversalting The Han 1ho Chinese cabbage during a salting process, which is caused by drying out in a long-term storage, there is a need to adjust salinity of a salting solution according to states of stored cabbages. In addition, the activity of the lactic acid bacteria starter may decrease due to on-site exposure during the mass-production process, there is a need to adjust a packaging amount of the lactic acid bacteria starter according to output.
- A standard operating procedure for manufacturing cancer-preventing kimchi was prepared by dividing the manufacturing process into several steps.

### 1-2. Diagram of Manufacturing Process of Cancer-preventing Kimchi

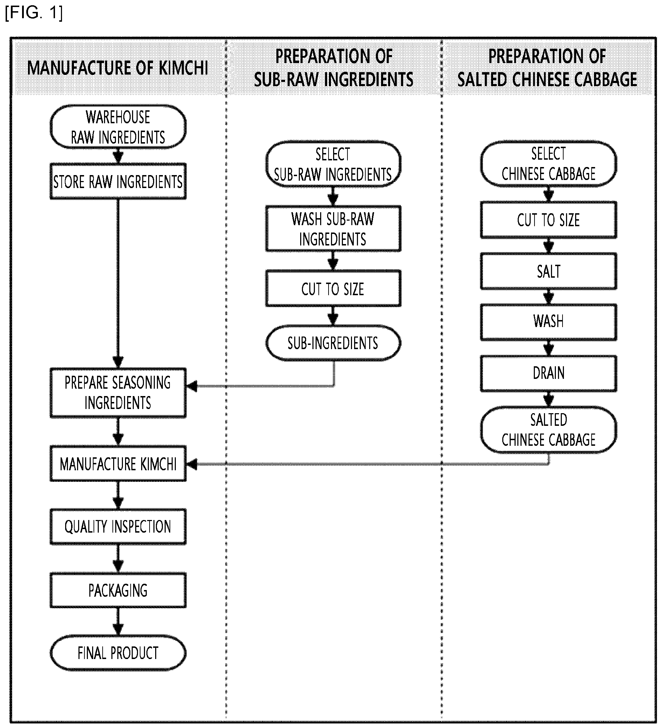

FIG. 1 is a diagram showing a manufacturing process of cancer-preventing kimchi.

### 1-3. Setting Standard Manufacturing Process of Cancer-preventing Kimchi

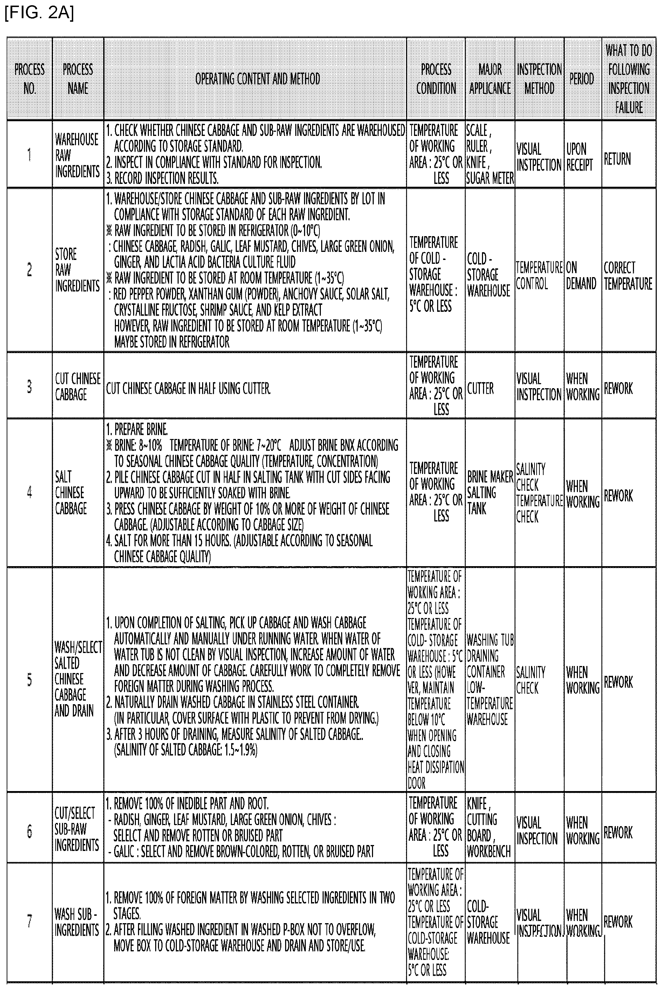

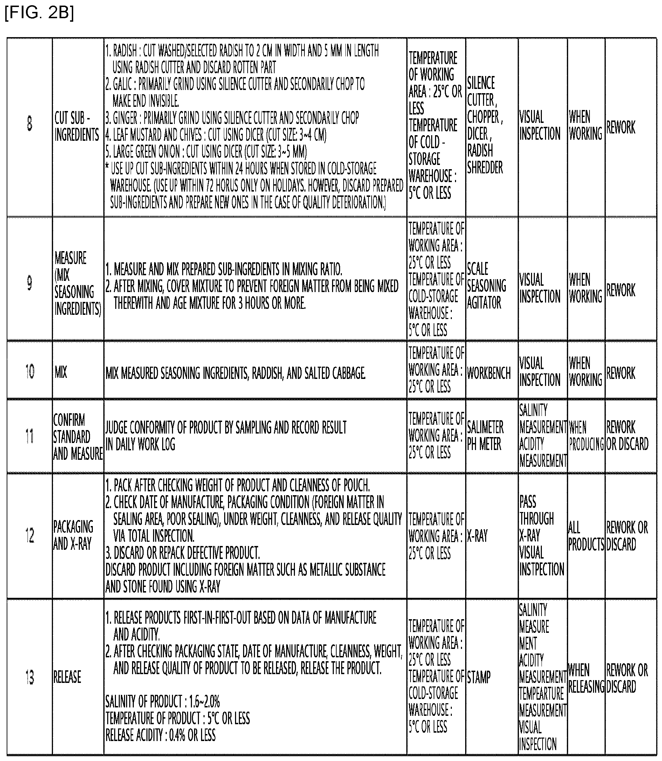

FIGS. 2A and 2B show a standard operating procedure of manufacturing cancer-preventing kimchi.

### Example 2: Analysis of Change in Quality of Kimchi During Distribution (Analysis of Physiochemical and Microorganism Quality)

- Changes in quality of kimchi were monitored under common distribution conditions of kimchi.

### 2-1. Monitoring Physiochemical Quality During Distribution

Changes in quality of the cancer-preventing kimchi prepared by the trial production were monitored during distribution while storing the kimchi at a constant distribution temperature of 7°C at which kimchi is generally distributed. With regard to the physiochemical quality, it was confirmed that fermentation proceeded from a pH of 5.65 measured immediately after the manufacture to a pH of 4.06 at 7 days of storage and gradually decreased thereafter indicating a tendency similar to that of kimchi generally distributed in the market.

In addition, a total acidity which is a quality index of ripened kimchi increased from 0.31% measured immediately after the manufacture to 0.83%, indicating an optimally ripened state at 7 days of storage, and gradually increased thereafter, indicating a tendency similar to that of kimchi generally distributed in the market.

### 2-2. Monitoring Microorganism Quality During Distribution

As a result of measuring changes in the total number of lactic acid bacteria, a viable cell count was 10⁷ CFU/g immediately after the manufacture allowing the lactic acid bacteria to serve as an initial starter and increased to 10⁹ CFU/g at 5 days after storage. Therefore, it may be determined that the starter played a normal role in the initial stage of kimchi fermentation. Since the viable cell count of 10⁹ CFU/g was maintained until 30 days after storage, it was also confirmed that the lactic acid bacteria had a positive effect on the functional cancer-preventing kimchi.

Although the number of yeasts, which was 10² CFU/g immediately after the manufacture, decreased until 19 days after storage, indicating that expression thereof was inhibited, the number increased to 10³ CFU/g thereafter.
- Changes in content of lycopene, as a main active ingredient of cancer-preventing kimchi, were measured during storage.

### 2-3. Analysis of Lycopene Content of Cancer-preventing Kimchi

The Han 1ho Chinese cabbage includes lycopene unlike other Chinese cabbage varieties, and lycopene, as an active ingredient of The Han 1ho Chinese cabbage, was maintained during a salting process and a manufacturing process of kimchi. Therefore, the cancer-preventing kimchi included the active ingredient of lycopene, which is not included in other kimchis, and 0.99 mg/g of lycopene was detected in The Han 1ho Chinese cabbage and 0.72 mg/g of lycopene was detected in the cancer-preventing kimchi.

Lycopene, as the active ingredient, was continuously maintained in the cancer-preventing kimchi for 6 months of storage, and thereby was suitable for exerting its functionality in the cancer-preventing kimchi .

### Example 3: Comparison and Evaluation of Preventive Effect of Cancer-preventing Kimchi on Inflammatory Bowel Disease Induced by Intake of Inflammation-inducing Substance of DSS (3 weeks) by Administering Cancer-preventing Kimchi Using Inflammatory Bowel Disease Induced Animal Model

- Cancer-preventing kimchi was freeze-dried to prepare an animal feed and the prepared animal feed was applied to an inflammatory bowel disease model. Thereafter, the degrees of outbreak were compared and pathological markers and mechanisms of molecular biological actions were analyzed.

### 3-1. Colitis Animal Model Including Cancer-preventing Kimchi

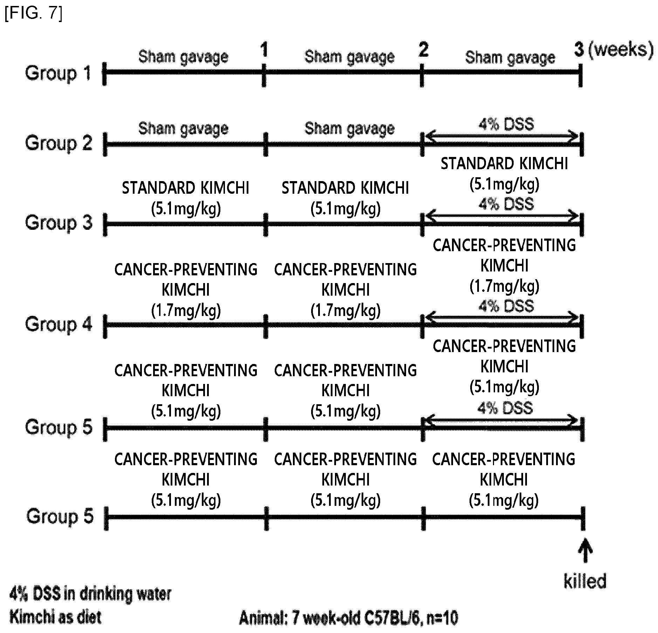

FIG. 7 shows the animal model in detail.

### 3-2. Result of Animal Model Study

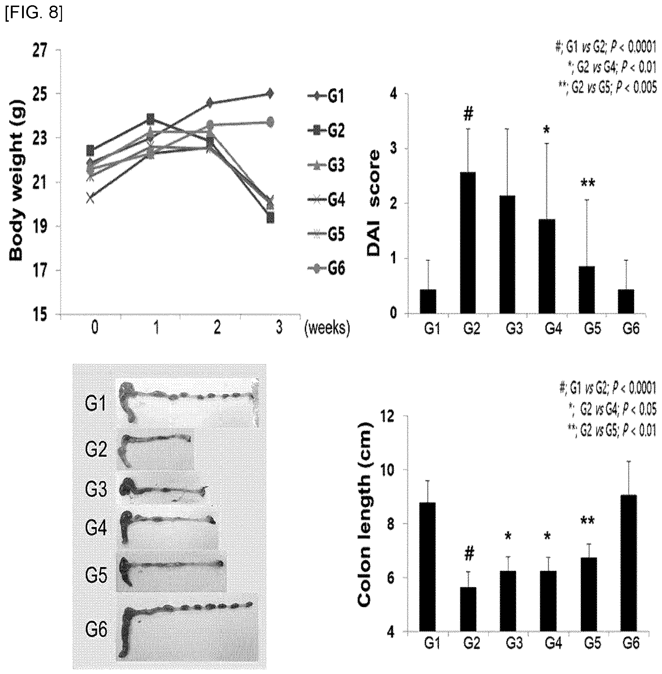

In general, when colitis is induced by administering dextran sulfate sodium (DSS), a significant decrease in body weight may be confirmed compared to a normal control group. In this case, although weight difference was confirmed among experimental groups, no significant difference was observed when compared with a group administered with DSS alone. However, based on DAI scores used to visually identify clinical symptoms (diarrhea, bloody stool, hernia, and *etc.*), it was confirmed that the groups administered with the cancer-preventing kimchi showed far lower DAI scores than that of the group administered DSS alone. In addition, when colitis was induced, the colon was swollen due to acute inflammation and the length of the colon was considerably reduced. However, it was confirmed that the length of the colon significantly increased in the groups administered with the cancer-preventing kimchi (FIG. 8).

### 3-3. Result of Animal Model Study

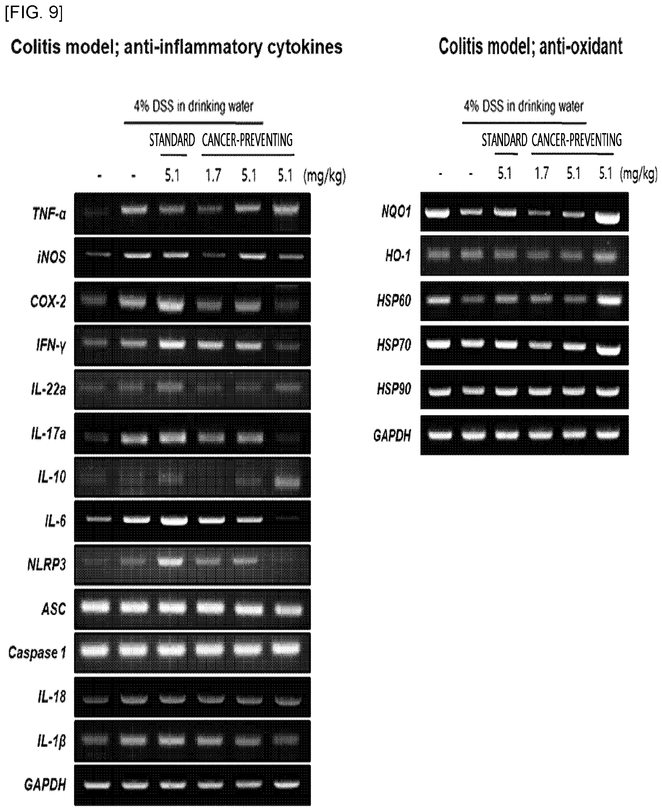

After extracting mRNA from colon tissue obtained from the experiments, genes related to inflammatory cytokines and anti-oxidants were analyzed. It was confirmed that expressions of most inflammatory cytokines were increased in the groups administered with DSS. Particularly, it was observed that the increased expressions were significantly reduced in the groups administered with the cancer-preventing kimchi, and this result also showed a significant difference from the group administered with kimchi manufactured according to a standard recipe. In addition, with regard to the genes related to the anti-oxidants, no significant difference was observed among the groups (FIG. 9).

### 3-4. Result of Animal Model Study

After extracting proteins from colon tissue obtained from the experiments, genes related to inflammation and antioxidation were analyzed. It was confirmed that expressions of most inflammation-related factors were increased in the groups administered with DSS. Particularly, it was observed that the increased expressions were significantly reduced in the groups administered with the cancer-preventing kimchi, and this result also showed a significant different from the group administered with the kimchi manufactured according to the standard recipe. In addition, with regard to the genes related to the anti-oxidants, no significant difference was observed among the groups.

### Example 4: Comparison of Degree of Colorectal Cancer Incidence in Animal Model

### 4-1. Long-term Two-stage Colorectal Cancer Animal Model Including Cancer-preventing Kimchi

FIG. 9 shows the animal model in detail.

### 4-2. Result of Animal Model Study

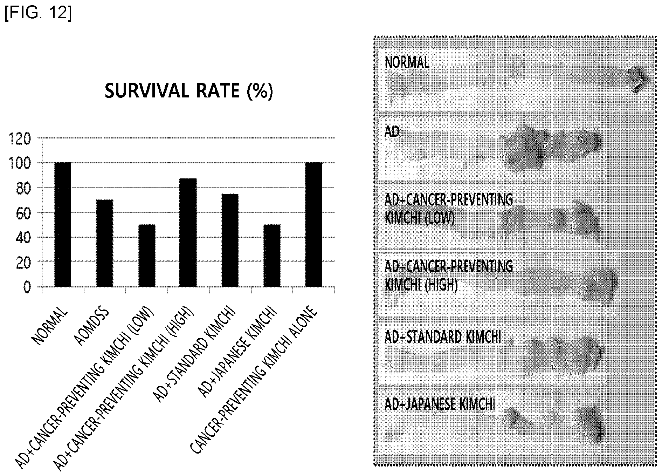

When an animal was administered with azoxymethane (AOM, first stage) and inflammation was induced with DSS (second stage), colorectal cancer was induced after 10 weeks or more. In this case, survival rates mostly decreased by colorectal cancer. As a result, while a survival rate of about 65% was maintained in the group administered with AomDSS alone, the group administered with a high concentration of the cancer-preventing kimchi showed a survival rate of about 85% which was higher than those of the group administered with the kimchi manufactured according to the standard recipe and a group administered with a Japanese kimchi. Further, although significant colorectal cancer incidence was observed in a gross lesion in the group administered with AomDSS alone, it was confirmed that colorectal cancer incidence significantly decreased in the groups administered with the cancer-preventing kimchi. In particular, it was also confirmed that the colorectal cancer incidence decreased in the case of kimchi manufactured according to the standard recipe and the Japanese kimchi, but the degree of the decrease in the colorectal cancer incidence thereby was significantly less than that by the cancer-preventing kimchi (FIG. 12).

### 4-3. Result of Animal Model Study

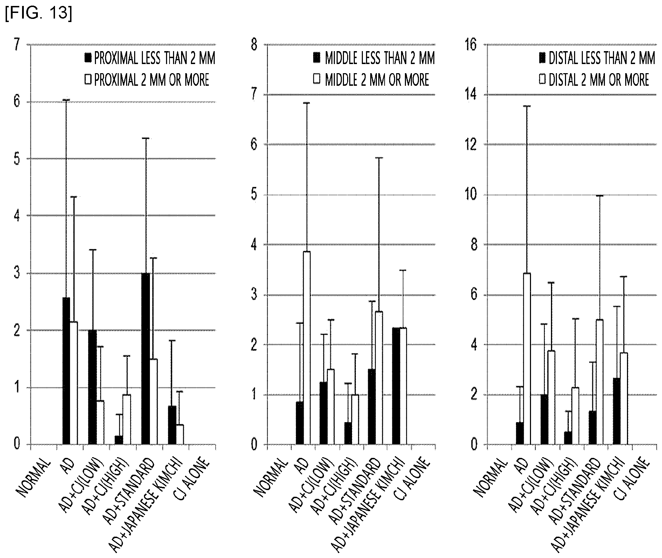

In the animal model described above, the number of tumors in each group according to size and region are shown in Table 1 below and FIG. 13.

**Table 1**

| | Proximal | | Middle | | Distal | | Total tumor number | | Total tumor number |
|---|---|---|---|---|---|---|---|---|---|
| | less than 2 mm | 2 mm or more | less than 2 mm | 2 mm or more | less than 2 mm | 2 mm or more | less than 2 mm | 2 mm or more | |
| Normal | 0 | 0 | 0 | 0 | 0 | 0 | 0 | 0 | 0 |
| AD | 2.6 | 2.1 | 0.9 | 3.9 | 0.9 | 6.9 | 4.3 | 12.9 | 17.1 |
| AD+CJ(low) | 2.0 | 0.8 | 1.3 | 1.5 | 2.0 | 3.8 | 5.3 | 6.0 | 11.3 |
| AD+CJ(high) | 0.1 | 0.9 | 0.4 | 1.0 | 0.5 | 2.3 | 1.0 | 4.1 | 5.1 |
| AD+standard | 3.0 | 1.5 | 1.5 | 2.7 | 1.3 | 5.0 | 5.8 | 9.2 | 15.0 |
| AD+ Japanese Kimchi | 0.7 | 0.3 | 2.3 | 23 | 2.7 | 3.7 | 5.7 | 6.3 | 12.0 |
| CJ Alone | 0 | 0 | 0 | 0 | 0 | 0 | 0 | 0 | 0 |

Depositary Authority: Korea Research Institute of Bioscience and Biotechnology
Accession No.: KCTC13043BP
Date of Deposit : June 10, 2016

## Claims

1. A fermented food comprising a lycopene-containing Chinese cabbage and lactic acid bacteria, wherein the lactic acid bacteria is *Leuconostoc mesenteroides, Lactobacillus plantarum,* or a combination thereof.

2. The fermented food of claim 1, wherein the Chinese cabbage is The Han 1ho Chinese cabbage.

3. The fermented food of claim 1, wherein the *Leuconostoc mesenteroides* is *Leuconostoc mesenteroides* CJLM119, and the *Lactobacillus plantarum* is *Lactobacillus plantarum* CJLP133.

4. The fermented food of claim 1, wherein a lycopene content of the fermented food is in the range of 50% to 99% relative to a lycopene content of Chinese cabbage before fermentation.

5. The fermented food of claim 1, wherein a lycopene content of the fermented food is in the range of 0.6 mg/g to 0.98 mg/g.

6. The fermented food of claim 1, wherein a lycopene content of the fermented food after 6 months of storage is in the range of 50% to 99% relative to a lycopene content of the fermented food after 7 days of storage.

7. The fermented food of claim 1 for use in preventing or treating cancer, hypertension, inflammation, or erythema.

8. The fermented food for the use of claim 7, wherein the cancer is colorectal cancer or gastric cancer.

9. A method of manufacturing a fermented food, the method comprising:
preparing a salted lycopene-containing Chinese cabbage and seasoning ingredients comprising lactic acid bacteria, wherein the lactic acid bacteria is *Leuconostoc mesenteroides, Lactobacillus plantarum,* or a combination thereof; and
mixing the seasoning ingredients with the salted Chinese cabbage.

10. A method of inhibiting a decrease in a lycopene content of a fermented food, the method comprising preparing the fermented food by mixing a lycopene-containing Chinese cabbage with lactic acid bacteria, wherein the lactic acid bacteria is *Leuconostoc mesenteroides, Lactobacillus plantarum,* or a combination thereof.

## Patentansprüche

1. Fermentiertes Nahrungsmittel, umfassend einen lycopinhaltigen Chinakohl und Milchsäurebakterien, wobei die Milchsäurebakterien *Leuconostoc mesenteroides, Lactobacillus plantarum* oder eine Kombination davon sind.

2. Fermentiertes Nahrungsmittel nach Anspruch 1, wobei der Chinakohl "The Han 1ho"-Chinakohl ist.

3. Fermentiertes Nahrungsmittel nach Anspruch 1, wobei die *Leuconostoc mesenteroides Leuconostoc mesenteroides* CJLM119 sind und der *Lactobacillus plantarum Lactobacillus plantarum* CJLP133 ist.

4. Fermentiertes Nahrungsmittel nach Anspruch 1, wobei der Lycopingehalt des fermentierten Nahrungsmittels im Bereich von 50 % bis 99 % liegt, bezogen auf den Lycopingehalt von Chinakohl vor der Fermentation.

5. Fermentiertes Nahrungsmittel nach Anspruch 1, wobei der Lycopingehalt des fermentierten Nahrungsmittels im Bereich von 0,6 mg/g bis 0,98 mg/g liegt.

6. Fermentiertes Nahrungsmittel nach Anspruch 1, wobei der Lycopingehalt des fermentierten Nahrungsmittels nach sechs Monaten Lagerung im Bereich von 50 % bis 99 % liegt, bezogen auf den Lycopingehalt des fermentierten Nahrungsmittels nach sieben Tagen Lagerung.

7. Fermentiertes Nahrungsmittel nach Anspruch 1 zur Verwendung bei der Vorbeugung oder Behandlung von Krebs, Bluthochdruck, Entzündungen oder Erythem.

8. Fermentiertes Nahrungsmittel zur Verwendung nach Anspruch 7, wobei der Krebs Dickdarmkrebs oder Magenkrebs ist.

9. Verfahren zur Herstellung eines fermentierten Nahrungsmittels, wobei das Verfahren umfasst:
Zubereiten eines gesalzenen lycopinhaltigen Chinakohls und von Würzzutaten, die Milchsäurebakterien umfassen, wobei die Milchsäurebakterien *Leuconostoc mesenteroides, Lactobacillus plantarum* oder eine Kombination davon sind; und
Mischen der Würzzutaten mit dem gesalzenen Chinakohl.

10. Verfahren zur Hemmung einer Abnahme des Lycopingehalts eines fermentierten Nahrungsmittels, wobei das Verfahren das Zubereiten des fermentierten Nahrungsmittels durch Mischen eines lycopinhhaltigen Chinakohls mit Milchsäurebakterien umfasst, wobei die Milchsäurebakterien *Leuconostoc mesenteroides, Lactobacillus plantarum* oder eine Kombination davon sind.

## Revendications

1. Aliment fermenté comprenant un chou chinois contenant du lycopène et une bactérie lactique, dans lequel la bactérie lactique est *Leuconostoc mesenteroides, Lactobacillus plantarum* ou une combinaison de celles-ci.

2. Aliment fermenté selon la revendication 1, dans lequel le chou chinois est le chou chinois Han 1ho.

3. Aliment fermenté selon la revendication 1, dans lequel la *Leuconostoc mesenteroides* est la CJLM119 de *Leuconostoc mesenteroides,* et la *Lactobacillus plantarum* est la CJLP133 de *Lactobacillus plantarum.*

4. Aliment fermenté selon la revendication 1, dans lequel une teneur en lycopène de l'aliment fermenté est dans la plage de 50 % à 99 % par rapport à une teneur en lycopène du chou chinois avant fermentation.

5. Aliment fermenté selon la revendication 1, dans lequel une teneur en lycopène de l'aliment fermenté est dans la plage de 0,6 mg/g à 0,98 mg/g.

6. Aliment fermenté selon la revendication 1, dans lequel une teneur en lycopène de l'aliment fermenté au bout de 6 mois de stockage est dans la plage de 50 % à 99 % par rapport à une teneur en lycopène de l'aliment fermenté au bout de 7 jours de stockage.

7. Aliment fermenté selon la revendication 1 pour une utilisation dans la prévention ou le traitement du cancer, de l'hypertension, de l'inflammation, ou de l'érythème.

8. Aliment fermenté pour l'utilisation selon la revendication 7, dans lequel le cancer est le cancer colorectal ou le cancer gastrique.

9. Procédé de fabrication d'un aliment fermenté, le procédé comprenant :
la préparation d'un chou chinois salé contenant du lycopène et d'ingrédients d'assaisonnement comprenant la bactérie lactique, où la bactérie lactique est *Leuconostoc mesenteroides, Lactobacillus plantarum* ou une combinaison de celles-ci ; et
le mélange des ingrédients d'assaisonnement avec le chou chinois salé.

10. Procédé d'inhibition d'une baisse d'une teneur en lycopène d'un aliment fermenté, le procédé comprenant la préparation de l'aliment fermenté en mélangeant un chou chinois contenant du lycopène avec une bactérie lactique, dans lequel la bactérie lactique est *Leuconostoc mesenteroides, Lactobacillus plantarum* ou une combinaison de celles-ci.
